# EUROPEAN PATENT APPLICATION

(11) **EP 4 064 709 A1**
(43) Date of publication of application: **28.09.2022**
(21) Application number: 21902013.8
(22) Date of filing: 09.07.2021
(51) Int. Cl.: H04N 21/2187, H04N 21/4788, H04N 21/478

(54) **GAME LIVE STREAMING PROCESSING METHOD AND ELECTRONIC DEVICE**

(30) Priority: 07.12.2020 CN 202011413412
(71) Applicant: Beijing Dajia Internet Information Technology Co., Ltd., Beijing 100085 (CN)
(72) Inventor: TANG, Xiao, Beijing 100085 (CN)
(74) Representative: Yang, Shu
(86) International application number: PCT/CN2021/105533
(87) International publication number: WO 2022/121302

(57) **Abstract**

The present disclosure relates to a method for processing game live streaming and an electronic device. The method for processing game live streaming is applied to a game live-streaming platform, and includes: acquiring, in response to receiving a first request from a first terminal, a first live-streaming screen by performing screen rendering based on a first video stream from the first terminal, wherein the first request is configured to request a second terminal to perform online game teaching on a current live-streaming game, and the first live-streaming screen is configured to display the current live-streaming game controlled by the first terminal and provide a second control for triggering a second request; and acquiring, in response to receiving the second request from the second terminal, a second live-streaming screen by performing screen rendering based on a second video stream from the second terminal.

## Description

### CROSS-REFERENCE TO RELATED APPLICATION

The present disclosure is based on and claims the priority to Chinese Patent Application No.202011413412.X filed on December 7, 2020, the content of which is herein incorporated by reference in its entirety.

### TECHNICAL FIELD

The present disclosure relates to the field of gaming technologies, and in particular, relates to a method for processing game live streaming and an electronic device.

### BACKGROUND

In the related art, game live-streaming generally refers to a method in which a viewer learns how to play a game by watching an anchor playing the game. In the case that the viewer wants to practice playing the game, the viewer needs to practice alone after the live-streaming, and a viewer client cannot interact with an anchor client in the game live-streaming process.

### SUMMARY

The present disclosure provides a method for processing game live streaming and an electronic device. The technical solutions of the present disclosure are as follows.

According to an aspect of embodiments of the present disclosure, a method for processing game live streaming is provided. The method includes:
acquiring, in response to receiving a first request from a first terminal, a first live-streaming screen by performing screen rendering based on a first video stream from the first terminal, wherein the first request is configured to request a second terminal to perform online game teaching on a current live-streaming game, and the first live-streaming screen is configured to display the current live-streaming game controlled by the first terminal and provide a second control for triggering a second request; and
acquiring, in response to receiving the second request from the second terminal, a second live-streaming screen by performing screen rendering based on a second video stream from the second terminal.

In some embodiments, the method further includes:
switching, in response to receiving the first request, a control authority of the current live-streaming game from the second terminal to the first terminal;
wherein an audio part of the first live-streaming screen includes at least one of audio data of the current live-streaming game, microphone audio data of the first terminal, and/or microphone audio data of the second terminal; and
switching, in response to receiving the second request, the control authority of the current live-streaming game from the first terminal to the second terminal.

In some embodiments, the method further includes:
pushing the second video stream to the first terminal, and acquiring the second live-streaming screen by performing screen rendering in the first terminal based on the second video stream, wherein the second live-streaming screen is configured to display the current live-streaming game controlled by the second terminal and provide a first control for triggering the first request.

In some embodiments, the second live-streaming screen is further configured to display virtual resource data corresponding to the first control; and the method further includes:
deducting, in response to receiving an authorization success message from the first terminal, a virtual resource indicated by the virtual resource data from a target virtual resource account, wherein the target virtual resource account is associated with a game account of the first terminal;
wherein the authorization success message indicates that the first terminal is authorized to transfer the virtual resource.

In some embodiments, the method further includes:
switching, in response to completing the online game teaching, a control authority of the current live-streaming game to the second terminal; and
receiving and storing score data from the first terminal, wherein the score data is configured to evaluate the online game teaching of the second terminal.

In some embodiments, the method further includes:
determining ranking data of the current live-streaming game based on the score data of the current live-streaming game, wherein the ranking data records score rankings of different users providing online game teaching for the current live-streaming game;
wherein the second terminal is selected based on the ranking data, and a game type of the current live-streaming game is displayed together with the ranking data.

According to another aspect of embodiments of the present disclosure, an apparatus for processing game live streaming is provided. The apparatus includes:
a first processing unit, configured to acquire, in response to receiving a first request from a first terminal, a first live-streaming screen by performing screen rendering based on a first video stream from the first terminal, wherein the first request is configured to request a second terminal to perform online game teaching on a current live-streaming game, and the first live-streaming screen is configured to display the current live-streaming game controlled by the first terminal and provide a second control for triggering a second request; and
a second processing unit, configured to acquire, in response to receiving the second request from the second terminal, a second live-streaming screen by performing screen rendering based on a second video stream from the second terminal.

In some embodiments, the apparatus is further configured to:
switch, in response to receiving the first request, a control authority of the current live-streaming game from the second terminal to the first terminal;
wherein an audio part of the first live-streaming screen includes at least one of audio data of the current live-streaming game, microphone audio data of the first terminal, and/or microphone audio data of the second terminal; and
switch, in response to receiving the second request, the control authority of the current live-streaming game from the first terminal to the second terminal.

In some embodiments, the apparatus further includes:
a pushing unit, configured to push the second video stream to the first terminal, and acquire the second live-streaming screen by performing screen rendering in the first terminal based on the second video stream, wherein the second live-streaming screen is configured to display the current live-streaming game controlled by the second terminal and provide a first control for triggering the first request.

In some embodiments, the second live-streaming screen is further configured to display virtual resource data corresponding to the first control; and the apparatus further includes:
a first acquiring unit, configured to deduct, in response to receiving an authorization success message from the first terminal, a virtual resource indicated by the virtual resource data from a target virtual resource account, wherein the target virtual resource account is associated with a game account of the first terminal;
wherein the authorization success message indicates that the first terminal is authorized to transfer the virtual resource.

In some embodiments, the apparatus further includes:
a second acquiring unit, configured to switch, in response to completing the online game teaching, a control authority of the current live-streaming game to the second terminal; and receive and store score data from the first terminal, wherein the score data is configured to evaluate the online game teaching of the second terminal; and
a determining unit, configured to determine ranking data of the current live-streaming game based on the score data of the current live-streaming game, wherein the ranking data records score rankings of different users providing online game teaching for the current live-streaming game;
wherein the second terminal is selected based on the ranking data, and a game type of the current live-streaming game is displayed together with the ranking data.

According to another aspect of embodiments of the present disclosure, an electronic device is provided. The electronic device includes: a processor; and a memory configured to store one or more instructions executable by the processor, when loading and executing the one or more instructions, is caused to:
acquire, in response to receiving a first request from a first terminal, a first live-streaming screen by performing screen rendering based on a first video stream from the first terminal, wherein the first request is configured to request a second terminal to perform online game teaching on a current live-streaming game, and the first live-streaming screen is configured to display the current live-streaming game controlled by the first terminal and providing a second control for triggering a second request; and
acquire, in response to receiving the second request from the second terminal, a second live-streaming screen by performing screen rendering based on a second video stream from the second terminal.

In some embodiments, the processor, when loading and executing the one or more instructions, is caused to:
switch, in response to receiving the first request, a control authority of the current live-streaming game from the second terminal to the first terminal,
wherein an audio part of the first live-streaming screen includes at least one of audio data of the current live-streaming game, microphone audio data of the first terminal, and/or microphone audio data of the second terminal; and
switch, in response to receiving the second request, the control authority of the current live-streaming game from the first terminal to the second terminal.

In some embodiments, the processor, when loading and executing the one or more instructions, is caused to:
push the second video stream to the first terminal, and acquire the second live-streaming screen by performing screen rendering in the first terminal based on the second video stream, wherein the second live-streaming screen is configured to display the current live-streaming game controlled by the second terminal and provide a first control for triggering the first request.

In some embodiments, the second live-streaming screen is further configured to display virtual resource data corresponding to the first control; and the processor, when loading and executing the one or more instructions, is caused to:
deduct, in response to receiving an authorization success message from the first terminal, a virtual resource indicated by the virtual resource data from a target virtual resource account, wherein the target virtual resource account is associated with a game account of the first terminal;
wherein the authorization success message indicates that the first terminal is authorized to transfer the virtual resource.

In some embodiments, the processor, when loading and executing the one or more instructions, is caused to:
switch, in response to completing the online game teaching, a control authority of the current live-streaming game to the second terminal; and
receive and store score data from the first terminal, wherein the score data is configured to evaluate the online game teaching of the second terminal.

In some embodiments, the processor, when loading and executing the one or more instructions, is caused to:
determine ranking data of the current live-streaming game based on the score data of the current live-streaming game, wherein the ranking data records score rankings of different users providing online game teaching for the current live-streaming game;
wherein the second terminal is selected based on the ranking data, and a game type of the current live-streaming game is displayed together with the ranking data.

According to another aspect of embodiments of the present disclosure, a non-volatile storage medium is provided. The non-volatile storage medium stores one or more instructions therein, wherein the one or more instructions, when loaded and executed by a processor of an electronic device, cause the electronic device to:
acquire, in response to receiving a first request from a first terminal, a first live-streaming screen by performing screen rendering based on a first video stream from the first terminal, wherein the first request is configured to request a second terminal to perform online game teaching on a current live-streaming game, and the first live-streaming screen is configured to display the current live-streaming game controlled by the first terminal and providing a second control for triggering a second request; and
acquire, in response to receiving the second request from the second terminal, a second live-streaming screen by performing screen rendering based on a second video stream from the second terminal.

According to another aspect of the embodiments of the present disclosure, a computer program product is provided. The computer program product, in response to being executed on an electronic device, is adapted to execute a program initialized with the following steps:
acquiring, in response to receiving a first request from a first terminal, a first live-streaming screen by performing screen rendering based on a first video stream from the first terminal, wherein the first request is configured to request a second terminal to perform online game teaching on a current live-streaming game, and the first live-streaming screen is configured to display the current live-streaming game controlled by the first terminal and provide a second control for triggering a second request; and
acquiring, in response to receiving the second request from the second terminal, a second live-streaming screen by performing screen rendering based on a second video stream from the second terminal.

The embodiments of the present disclosure allow a viewer terminal and an anchor terminal to interact with each other for a current live-streaming game in a game live-streaming process, which significantly improves the interactivity between an anchor and a viewer.

### BRIEF DESCRIPTION OF THE DRAWINGS

FIG. 1 is a schematic diagram of a scenario of a method for processing game live streaming according to an exemplary embodiment;
FIG. 2 is a flowchart of a method for processing game live streaming according to an exemplary embodiment;
FIG. 3 is a flowchart of another method for processing game live streaming according to an exemplary embodiment;
FIG. 4 is a flowchart of another method for processing game live streaming according to an exemplary embodiment;
FIG. 5 is a flowchart of another method for processing game live streaming according to an exemplary embodiment;
FIG. 6 is a block diagram of an apparatus for processing game live-streaming according to an exemplary embodiment; and
FIG. 7 is a block diagram of an electronic device according to an exemplary embodiment.

### DETAILED DESCRIPTION

To make those of ordinary skill in the art better understand the technical solutions of the present disclosure, the following clearly and completely describes the technical solutions in embodiments of the present disclosure with reference to the accompanying drawings.

The phrase "at least one of A, B, and C" includes the following cases: A alone, B alone, C alone, A and B, A and C, B and C, and A, B and C.

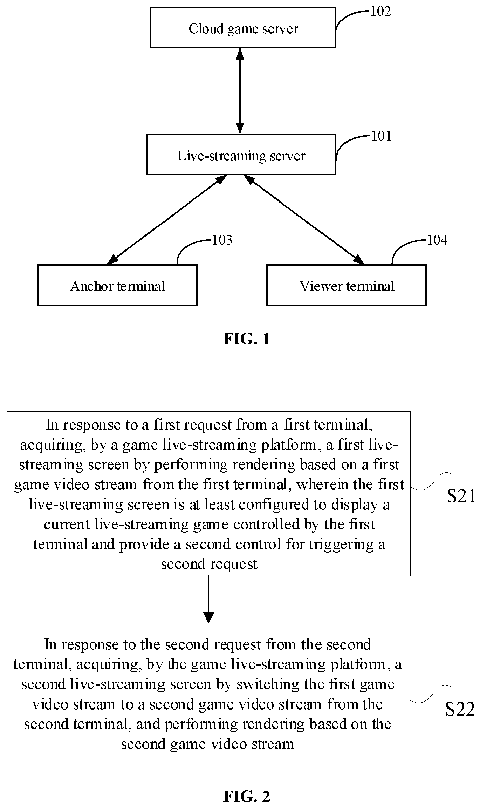

FIG. 1 is a schematic diagram of a scenario of a method for processing game live streaming according to an exemplary embodiment. As shown in FIG. 1, the scenario includes: a live-streaming server 101, a cloud game server 102, an anchor terminal 103, and a viewer terminal 104.

In some embodiments, the live-streaming server 101 is responsible for receiving a game video stream from the cloud game server 102, and pushing the game video stream to the anchor terminal 103 and the viewer terminal 104. In response to an anchor having the game control permission, the anchor terminal 103 is responsible for sending a game operation instruction of an anchor to the live-streaming server 101, and then the live-streaming server 101 sends a game operation instruction to the cloud game server 102. In addition, the anchor terminal 103 also supports pushing a local video stream, and in response to the local video stream pushed by the anchor terminal 103, the live-streaming server 101 switches from the game video stream to the local video stream pushed by the anchor terminal 103. In addition, in response to the viewer terminal 104 controlling the current live-streaming game, that is, the viewer having the game control permission, the viewer terminal 104 is responsible for sending a game operation instruction of the viewer to the live-streaming server 101.

In some embodiments, the method for processing game live streaming is applied to an online payment guiding teaching scene of cloud game live-streaming. A viewer A applies for game teaching, and after an anchor agrees, control authority of a current live-streaming game is switched to the viewer A. The anchor teaches the viewer A while watching operations of the viewer A. Moreover, in the teaching process, it is supported to switch the control authority of the current live-streaming game from the viewer A to the anchor, such that the anchor can explain while demonstrating the process to the viewer. At the same time, other viewers in a live-streaming room can also watch the whole game teaching process.

In some other embodiments, the type of the anchor terminal 103 or the viewer terminal 104 includes, but is not limited to smart phone, tablet computer, notebook computer, e-reader, a desktop computer, and the like.

FIG. 2 is a flowchart of a method for processing game live streaming according to an exemplary embodiment. As shown in FIG. 2, the method for processing game live streaming is applied to a game live-streaming platform. For example, the game live-streaming platform is the live-streaming server 101 in FIG. 1, and the method includes the following steps:

In S21, in response to a first request from a first terminal, the game live-streaming platform acquires a first live-streaming screen by performing rendering based on a first game video stream from the first terminal, wherein the first live-streaming screen is at least configured to display a current live-streaming game controlled by the first terminal and provide a second control for triggering a second request.

The first game video stream is also referred to as a first video stream, and the first live-streaming screen is also referred to as a first game live-streaming screen. After receiving the first request from the first terminal, the game live-streaming platform acquires the first live-streaming screen by performing screen rendering based on the first game video stream from the first terminal. In this case, the second terminal and other viewer terminals in a live-streaming room all display the first live-streaming screen.

In some embodiments, in response to the first terminal being an anchor terminal, the second terminal is a viewer terminal; in response to the second terminal being an anchor terminal, the first terminal is a viewer terminal. In the embodiments of the present disclosure, the first terminal being a viewer terminal and the second terminal being an anchor terminal is taken as an example for description.

In some embodiments, the first request is configured to request the second terminal to perform online game teaching on the current live-streaming game. The online game teaching involves a switch of the control authority of the current live-streaming game. Initially, the control authority of the current live-streaming game belongs to the second terminal. That is, the first request is used by the first terminal for requesting to acquire the control authority of the current live-streaming game; the second request is used by the second terminal for requesting to switch the control authority of the current live-streaming game, that is, requesting to switch the control authority of the current live-streaming game from the first terminal to the second terminal, and the second request is essentially configured to request the control authority of the current live-streaming game.

In S22, in response to the second request from the second terminal, the game live-streaming platform acquires a second live-streaming screen by switching the first game video stream to a second game video stream from the second terminal, and performing rendering based on the second game video stream.

The second game video stream is also referred to as a second video stream, and the second live-streaming screen is also referred to as a second game live-streaming screen. After receiving the second request from the second terminal, the game live-streaming platform acquires the second live-streaming screen by switching the live-streaming screen, and performing screen rendering based on the second game video stream from the second terminal. In this case, the first terminal and other viewer terminals in the live-streaming room all display the second live-streaming screen.

The present disclosure allows a viewer terminal and an anchor terminal to interact with each other for a current live-streaming game in a game live-streaming process, which can improve the interactivity between an anchor and a viewer.

In some embodiments, a live-streaming screen including a cloud game scene is rendered in the game live-streaming platform, wherein the cloud game scene is a scene in which the first terminal and the second terminal interact with each other based on the current live-streaming game in the live-streaming screen. The cloud game scene includes at least one of audio data of the current live-streaming game, microphone audio data of the first terminal, and microphone audio data of the second terminal. For example, an audio part of the first live-streaming screen includes at least one of audio data of the current live-streaming game, microphone audio data of the first terminal, and/or microphone audio data of the second terminal.

The embodiments of the present disclosure are illustrated by using an example in which the first terminal is a viewer terminal and the second terminal is an anchor terminal:

In some embodiments, in the process that the anchor provides online game teaching for the viewer A, the control authority of the current live-streaming game is owned by the viewer A, and the game live-streaming platform receives the first game video stream from the viewer terminal, and pushes the first game video stream to the anchor terminal, such that the current live-streaming game controlled by the viewer terminal is displayed and the second control for triggering the second request is provided in the viewer terminal and the anchor terminal.

In some embodiments, the anchor and the viewer A can apply for switching the control authority of the current live-streaming game at any time in the process of online game teaching. For example, the anchor triggers the second request by clicking the second control (e.g., in the form of a button) on the second terminal, to request the control authority of the current live-streaming game, and the game live-streaming platform switches the first game video stream to the second game video stream from the anchor terminal; that is, the anchor explains to the viewer A while demonstrating the game.

Moreover, other viewers in the live-streaming room except the viewer A can all watch the anchor teach the viewer A how to play the game, and can also hear the conversation between the viewer A and the anchor.

The embodiments of the present disclosure can significantly improve the interactivity between the anchor and the viewer and help the viewer better learn game skills. By using the characteristics of the cloud game scene, while teaching the viewer to play the game, the anchor can acquire the control authority of the current live-streaming game at any time; related game skills are displayed in the current live-streaming room, as if the anchor and the viewer are in a face-to-face teaching scene.

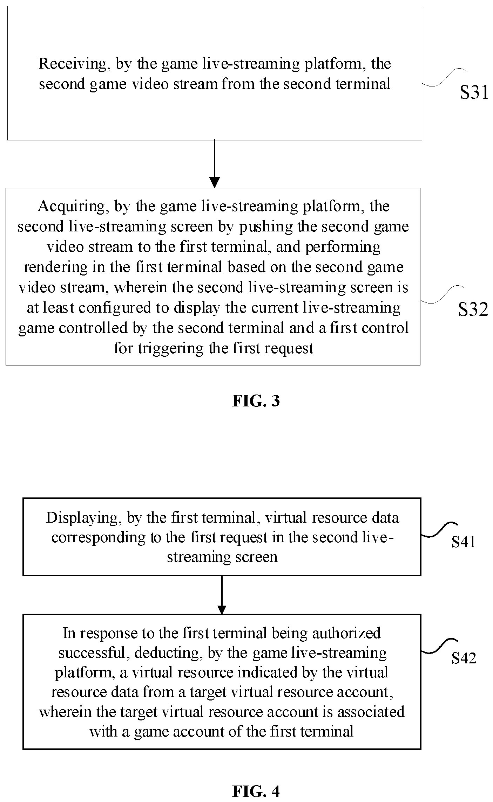

In some embodiments, referring to FIG. 3, before responding to the first request from the first terminal, the method for processing game live streaming further includes the following steps:

In S31, the game live-streaming platform receives the second game video stream from the second terminal.

Step S31 and step S32 are performed before step S21, for the current live-streaming game, before the viewer applies for online game teaching, the control authority of the current live-streaming game is owned by the anchor, and the viewer enters the live-streaming room to watch the anchor play the game; correspondingly, the viewer terminal in the live-streaming room displays the current live-streaming game controlled by the anchor.

In S32, the game live-streaming platform acquires the second live-streaming screen by pushing the second game video stream to the first terminal, and performing rendering in the first terminal based on the second game video stream, wherein the second live-streaming screen is at least configured to display the current live-streaming game controlled by the second terminal and provide a first control for triggering the first request.

The first control is displayed in the first live-streaming screen, and the second control is displayed in the second live-streaming screen. The two controls can allow the control authority of the current live-streaming game to be switched between the anchor terminal and the viewer terminal flexibly, which brings great convenience to the online game teaching and achieves high interaction efficiency.

The first terminal being a viewer terminal and the second terminal being an anchor terminal is taken as an example. Before responding to the first request from the viewer terminal, the game live-streaming platform receives the second game video stream from the anchor terminal, and acquires the second live-streaming screen by pushing the second game video stream to the viewer terminal and performing rendering in the viewer terminal based on the second game video stream. Therefore, through the second live-streaming screen, at least the current live-streaming game controlled by the anchor terminal can be displayed, and the first control for triggering the first request can be provided.

In some embodiments, referring to FIG. 4, before the first live-streaming screen is acquired by performing rendering based on the first game video stream from the first terminal, the method for processing game live streaming further includes the following steps:

In S41, the first terminal displays virtual resource data corresponding to the first request in the second live-streaming screen.

In some embodiments, in response to a payment guiding teaching function being used by the anchor, the second live-streaming screen is further configured to display the virtual resource data corresponding to the first control. For example, the viewer A logs into the viewer terminal to enter the live-streaming room, and watches the cloud game live-streaming of the anchor in the live-streaming room normally. Because the current live-streaming game in the live-streaming room is controlled by the anchor, the anchor can enable the payment guiding teaching function at any time, and set a corresponding payment amount, for example, 10 yuan per round. After the anchor finishes the settings, the viewer terminal displays an entry for applying for payment guiding and the corresponding payment amount.

In some embodiments, the entry for applying for payment guiding corresponds to the first control (for example, in the form of a button), and the corresponding payment amount is the virtual resource data corresponding to the first request.

The viewer A triggers the first request by clicking the first control displayed in the viewer terminal to apply for payment, and then the anchor teaches the viewer A to practice the current live-streaming game. After the anchor receives and approves the application for payment guiding from the viewer A, a payment panel pops up in the viewer terminal, and the virtual resource data corresponding to the first request is displayed. In some embodiments, the payment panel is placed in front, and is displayed in front of the second live-streaming screen.

In S42, in response to the first terminal being authorized successful, the game live-streaming platform deducts a virtual resource indicated by the virtual resource data from a target virtual resource account, wherein the target virtual resource account is associated with a game account of the first terminal.

In response to the viewer terminal being authorized successful, that is, in response to receiving an authorization success message from the first terminal, the game live-streaming platform acquires a payment amount from the target virtual resource account corresponding to the viewer terminal, and switches the control authority of the current live-streaming game to the viewer terminal after the viewer A makes a payment successfully, wherein the authorization success message indicates that the viewer terminal is authorized to transfer the virtual resource; in this case, the anchor and the viewer A are in a voice microphone connection, and the anchor teaches the viewer A based on the current live-streaming game.

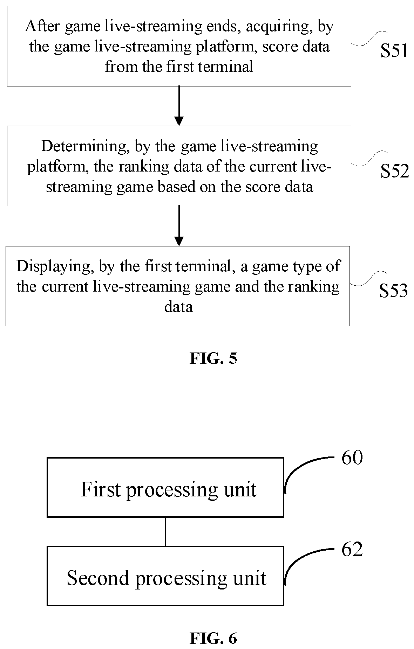

In some embodiments, FIG. 5 is a flowchart of another method for processing game live streaming according to an exemplary embodiment. Referring to FIG. 5, the method for processing game live streaming further includes the following steps:

In S51, after game live-streaming ends, the game live-streaming platform acquires score data from the first terminal.

In some embodiments, in response to completing the online game teaching, the game live-streaming platform switches the control authority of the current live-streaming game to the second terminal, and receives and stores the score data from the first terminal, wherein the score data is configured to evaluate the online game teaching of the second terminal.

In S52, the game live-streaming platform determines ranking data of the current live-streaming game based on the score data.

After the online game guiding ends, the control authority of the current live-streaming game is switched to the anchor terminal, the viewer A scores the game guiding process; the game live-streaming platform acquires and records score data from different viewer terminals, and determines ranking data of the current live-streaming game based on the score data of the current live-streaming game, wherein the ranking data records score rankings of different anchors providing online game teaching for the current live-streaming game.

In S53, the first terminal displays a game type of the current live-streaming game and the ranking data.

In some embodiments, the embodiments of the present disclosure support displaying the game type of the current live-streaming game and the ranking data. For example, according to live-streaming games of different types, score rankings of corresponding anchors are displayed. In response to the viewer needing online game guidance, an anchor with the highest score can be selected according to the rankings to guide the viewer to play the online game.

Each embodiment of the present disclosure can be executed alone, or executed together with other embodiments, which are all considered as the protection scope of the present disclosure.

FIG. 6 is a block diagram of an apparatus for processing game live-streaming according to an exemplary embodiment. As shown in FIG. 6, the apparatus includes: a first processing unit 60 and a second processing unit 62.

The first processing unit 60 is configured to acquire, in response to receiving a first request from a first terminal, a first live-streaming screen by performing screen rendering based on a first video stream from the first terminal, wherein the first request is configured to request a second terminal to perform online game teaching on a current live-streaming game, and the first live-streaming screen is configured to display the current live-streaming game controlled by the first terminal and provide a second control for triggering a second request.

The second processing unit 62 is configured to acquire, in response to receiving the second request from the second terminal, a second live-streaming screen by performing screen rendering based on a second video stream from the second terminal.

It should be noted that the first processing unit 60 and the second processing unit 62 correspond to step S21 to step S22 in the above method embodiment. The modules are the same as the examples and application scenes realized by the corresponding steps, but are not limited to the content disclosed in the embodiment of the method for processing game live streaming. It should be noted that the above modules may be operated in an electronic device as a part of the apparatus.

In some embodiments, the apparatus for processing game live-streaming is further configured to:
switch, in response to receiving the first request, a control authority of the current live-streaming game from the second terminal to the first terminal,
wherein an audio part of the first live-streaming screen includes at least one of audio data of the current live-streaming game, microphone audio data of the first terminal, and/or microphone audio data of the second terminal; and
switch, in response to receiving the second request, the control authority of the current live-streaming game from the first terminal to the second terminal.

In some embodiments, the apparatus for processing game live-streaming further includes:
a pushing unit, configured to push the second video stream to the first terminal, and acquire the second live-streaming screen by performing screen rendering in the first terminal based on the second video stream, wherein the second live-streaming screen is configured to display the current live-streaming game controlled by the second terminal and provide a first control for triggering the first request.

In some embodiments, the second live-streaming screen is further configured to display virtual resource data corresponding to the first control; and the apparatus for processing game live-streaming further includes:
a first acquiring unit, configured to deduct, in response to receiving an authorization success message from the first terminal, a virtual resource indicated by the virtual resource data from a target virtual resource account, wherein the target virtual resource account is associated with a game account of the first terminal;
wherein the authorization success message indicates that the first terminal is authorized to transfer the virtual resource.

In some embodiments, the apparatus for processing game live-streaming further includes:
a second acquiring unit, configured to switch, in response to completing the online game teaching, a control authority of the current live-streaming game to the second terminal; and receive and store score data from the first terminal, wherein the score data is configured to evaluate the online game teaching of the second terminal; and
a determining unit, configured to determine ranking data of the current live-streaming game based on the score data of the current live-streaming game, wherein the ranking data records score rankings of different users providing online game teaching for the current live-streaming game;
wherein the second terminal is selected based on the ranking data, and a game type of the current live-streaming game is displayed together with the ranking data.

For the apparatus in the above embodiment, specific manner in which each module operates has been described in detail in the embodiments related to the method, and will not be described in detail here.

According to the embodiments of the present disclosure, an electronic device is further provided. The electronic device includes: a processor; and a memory configured to store one or more instructions executable by the processor, wherein the processor, when loading and executing the one or more instructions, is caused to:

acquire, in response to receiving a first request from a first terminal, a first live-streaming screen by performing screen rendering based on a first video stream from the first terminal, wherein the first request is configured to request a second terminal to perform online game teaching on a current live-streaming game, and the first live-streaming screen is configured to display the current live-streaming game controlled by the first terminal and provide a second control for triggering a second request; and
acquire, in response to receiving the second request from the second terminal, a second live-streaming screen by performing screen rendering based on a second video stream from the second terminal.

In some embodiments, the processor, when loading and executing the one or more instructions, is caused to:
switch, in response to receiving the first request, a control authority of the current live-streaming game from the second terminal to the first terminal,
wherein an audio part of the first live-streaming screen includes at least one of audio data of the current live-streaming game, microphone audio data of the first terminal, and/or microphone audio data of the second terminal; and
switch, in response to receiving the second request, the control authority of the current live-streaming game from the first terminal to the second terminal.

In some embodiments, the processor, when loading and executing the one or more instructions, is caused to:
push the second video stream to the first terminal, and acquire the second live-streaming screen by performing screen rendering in the first terminal based on the second video stream, wherein the second live-streaming screen is configured to display the current live-streaming game controlled by the second terminal and provide a first control for triggering the first request.

In some embodiments, the second live-streaming screen is further configured to display virtual resource data corresponding to the first control; and the processor, when loading and executing the one or more instructions, is caused to:
deduct, in response to receiving an authorization success message from the first terminal, a virtual resource indicated by the virtual resource data from a target virtual resource account, wherein the target virtual resource account is associated with a game account of the first terminal;
wherein the authorization success message indicates that the first terminal is authorized to transfer the virtual resource.

In some embodiments, the processor, when loading and executing the one or more instructions, is caused to:
switch, in response to completing the online game teaching, a control authority of the current live-streaming game to the second terminal; and
receive and store score data from the first terminal, wherein the score data is configured to evaluate the online game teaching of the second terminal.

In some embodiments, the processor, when loading and executing the one or more instructions, is caused to:
determine ranking data of the current live-streaming game based on the score data of the current live-streaming game, wherein the ranking data records score rankings of different users providing online game teaching for the current live-streaming game;
wherein the second terminal is selected based on the ranking data, and a game type of the current live-streaming game is displayed together with the ranking data.

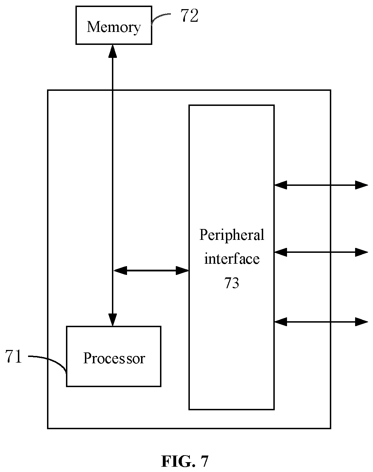

In some embodiments, FIG. 7 is a block diagram of an electronic device according to an exemplary embodiment. As shown in FIG. 7, the electronic device includes: at least one (only one is shown in the figure) processor 71, a memory 72, and a peripheral interface 73.

The memory 72 is configured to store computer programs and modules, such as instructions corresponding to the method for processing game live streaming in the embodiments of the present disclosure and the modules corresponding to the apparatus for processing game live streaming. The processor 71 runs the software programs and modules stored in the memory 72, thereby executing various functional applications and data processing, to perform the above method for processing game live streaming.

In some embodiments, the memory 72 includes a high-speed random access memory and a non-volatile memory, such as one or more magnetic storage apparatuses, flash memories, or other non-volatile solid-state memories. In some embodiments, the memory 72 further includes memories remotely configured relative to the processor 71, and these remote memories may be connected to the electronic device through a network. Examples of the foregoing network include, but are not limited to, the Internet, an enterprise intranet, a local area network, a mobile communication network, and a combination thereof.

In some embodiments, the processor 71 calls information and application programs stored in the memory 72, to perform the above method for processing game live streaming. For example, the transmission apparatus is a memory controller.

In some embodiments, the peripheral interface 73 is configured to connect to a radio frequency module, an audio module, a display screen, and the like.

According to the embodiments of the present disclosure, a non-volatile storage medium is further provided. The non-volatile storage medium stores one or more instructions therein, wherein the one or more instructions, when loaded and executed by a processor of an electronic device, cause the electronic device to:
acquire, in response to receiving a first request from a first terminal, a first live-streaming screen by performing screen rendering based on a first video stream from the first terminal, wherein the first request is configured to request a second terminal to perform online game teaching on a current live-streaming game, and the first live-streaming screen is configured to display the current live-streaming game controlled by the first terminal and provide a second control for triggering a second request; and
acquire, in response to receiving the second request from the second terminal, a second live-streaming screen by performing screen rendering based on a second video stream from the second terminal.

According to the embodiments of the present disclosure, a computer program product is provided. The computer program product, in response to being executed on an electronic device, is adapted to execute a program initialized with the following steps:
acquiring, in response to receiving a first request from a first terminal, a first live-streaming screen by performing screen rendering based on a first video stream from the first terminal, wherein the first request is configured to request a second terminal to perform online game teaching on a current live-streaming game, and the first live-streaming screen is configured to display the current live-streaming game controlled by the first terminal and provide a second control for triggering a second request; and
acquiring, in response to receiving the second request from the second terminal, a second live-streaming screen by performing screen rendering based on a second video stream from the second terminal.

According to the embodiments of the present disclosure, a method for processing game live streaming is provided. The method for processing game live streaming is applied to a game live-streaming platform. For example, the game live-streaming platform is the live-streaming server 101 in FIG. 1, and the method includes the following steps:

In S81, acquiring, in response to a first request instruction from a first client, a first game live-streaming interface by performing rendering based on a first game video stream from the first client, wherein the first game live-streaming interface is at least configured to display a current live-streaming game controlled by the first client and provide a second request control for triggering a second request instruction.

In S82, switching, in response to the second request instruction from a second client, the first game video stream to a second game video stream from the second client, and acquiring a second game live-streaming interface by performing rendering based on the second game video stream.

The present disclosure allows a viewer terminal and an anchor terminal to interact with each other with respect to a current live-streaming game in a game live-streaming process, which can improve the interactivity between an anchor and a viewer.

In some embodiments, the method for processing game live streaming is applied to the game live-streaming platform. A game live-streaming interface including a cloud game scene is rendered in the game live-streaming platform. The cloud game scene is a scene in which the first client and the second client interact with each other based on the current live-streaming game in the game live-streaming interface, wherein the cloud game scene includes at least one of audio data of the current live-streaming game, microphone audio data of the first client, and/or microphone audio data of the second client.

In some embodiments, before responding to the first request instruction from the first client, the method for processing game live streaming further includes:
receiving the second game video stream from the second client; and
pushing the second game video stream to the first client, and acquiring the second game live-streaming interface by performing rendering in the first client based on the second game video stream, wherein the second game live-streaming interface is at least configured to display the current live-streaming game controlled by the second client and provide a first request control for triggering the first request instruction.

In some embodiments, before acquiring the first game live-streaming interface by performing rendering based on the first game video stream from the first client, the method for processing game live streaming further includes:
displaying virtual resource data corresponding to the first request instruction in the second game live-streaming interface; and
acquiring, in response to the first client being authorized successful, the virtual resource indicated by the virtual resource data from a target virtual resource account, wherein the target virtual resource account is associated with a game account of the first client.

In some embodiments, the method for processing game live streaming further includes:
after the end of game live-streaming, acquiring score data from the first client;
determining ranking data of the current live-streaming game based on the score data; and
displaying a game type of the current live-streaming game and the ranking data.

In some embodiments, the technical solution of the present disclosure essentially, or a part contributing to the prior art, or a part or all of the technical solution may be embodied in a form of a computer program product. The computer program product is stored on a non-volatile storage medium, and includes several instructions to enable an electronic device (which may be a personal computer, a server, a network device, or the like) to execute all or some steps of the method for processing game live streaming. The foregoing non-volatile storage medium includes: a USB flash disk, a read-only memory (ROM), a random access memory (RAM), a mobile hard disk, a magnetic disk, an optical disc, or other media capable of storing program code.

## Claims

1. A method for processing game live streaming, comprising:
acquiring, in response to receiving a first request from a first terminal, a first live-streaming screen by performing screen rendering based on a first video stream from the first terminal, wherein the first request is configured to request a second terminal to perform online game teaching on a current live-streaming game, and the first live-streaming screen is configured to display the current live-streaming game controlled by the first terminal and provide a second control for triggering a second request; and
acquiring, in response to receiving the second request from the second terminal, a second live-streaming screen by performing screen rendering based on a second video stream from the second terminal.

2. The method according to claim 1, further comprising:
switching, in response to receiving the first request, a control authority of the current live-streaming game from the second terminal to the first terminal,
wherein an audio part of the first live-streaming screen comprises at least one of audio data of the current live-streaming game, microphone audio data of the first terminal, and/or microphone audio data of the second terminal; and
switching, in response to receiving the second request, the control authority of the current live-streaming game from the first terminal to the second terminal.

3. The method according to claim 1, further comprising:
pushing the second video stream to the first terminal, and acquiring the second live-streaming screen by performing screen rendering in the first terminal based on the second video stream, wherein the second live-streaming screen is configured to display the current live-streaming game controlled by the second terminal and provide a first control for triggering the first request.

4. The method according to claim 3, wherein the second live-streaming screen is further configured to display virtual resource data corresponding to the first control; and the method further comprises:
deducting, in response to receiving an authorization success message from the first terminal, a virtual resource indicated by the virtual resource data from a target virtual resource account, wherein the target virtual resource account is associated with a game account of the first terminal;
wherein the authorization success message indicates that the first terminal is authorized to transfer the virtual resource.

5. The method according to claim 1, further comprising:
switching, in response to completing the online game teaching, a control authority of the current live-streaming game to the second terminal; and
receiving and storing score data from the first terminal, wherein the score data is configured to evaluate the online game teaching of the second terminal.

6. The method according to claim 5, further comprising:
determining ranking data of the current live-streaming game based on the score data of the current live-streaming game, wherein the ranking data records score rankings of different users providing online game teaching for the current live-streaming game;
wherein the second terminal is selected based on the ranking data, and a game type of the current live-streaming game is displayed together with the ranking data.

7. An apparatus for processing game live streaming, comprising:
a first processing unit, configured to acquire, in response to receiving a first request from a first terminal, a first live-streaming screen by performing screen rendering based on a first video stream from the first terminal, wherein the first request is configured to request a second terminal to perform online game teaching on a current live-streaming game, and the first live-streaming screen is configured to display the current live-streaming game controlled by the first terminal and provide a second control for triggering a second request; and
a second processing unit, configured to acquire, in response to receiving the second request from the second terminal, a second live-streaming screen by performing screen rendering based on a second video stream from the second terminal.

8. The apparatus according to claim 7, wherein the apparatus is further configured to:
switch, in response to receiving the first request, a control authority of the current live-streaming game from the second terminal to the first terminal,
wherein an audio part of the first live-streaming screen comprises at least one of audio data of the current live-streaming game, microphone audio data of the first terminal, and/or microphone audio data of the second terminal; and
switch, in response to receiving the second request, the control authority of the current live-streaming game from the first terminal to the second terminal.

9. The apparatus according to claim 7, further comprising:
a pushing unit, configured to push the second video stream to the first terminal, and acquire the second live-streaming screen by performing screen rendering in the first terminal based on the second video stream, wherein the second live-streaming screen is configured to display the current live-streaming game controlled by the second terminal and provide a first control for triggering the first request.

10. The apparatus according to claim 7, wherein the second live-streaming screen is further configured to display virtual resource data corresponding to the first control; and the apparatus further comprises:
a first acquiring unit, configured to deduct, in response to receiving an authorization success message from the first terminal, a virtual resource indicated by the virtual resource data from a target virtual resource account, wherein the target virtual resource account is associated with a game account of the first terminal;
wherein the authorization success message indicates that the first terminal is authorized to transfer the virtual resource.

11. The apparatus according to claim 7, further comprising:
a second acquiring unit, configured to switch, in response to completing the online game teaching, a control authority of the current live-streaming game to the second terminal; and receive and store score data from the first terminal, wherein the score data is configured to evaluate the online game teaching of the second terminal.

12. The apparatus according to claim 11, further comprising:
a determining unit, configured to determine ranking data of the current live-streaming game based on the score data of the current live-streaming game, wherein the ranking data records score rankings of different users providing online game teaching for the current live-streaming game;
wherein the second terminal is selected based on the ranking data, and a game type of the current live-streaming game is displayed together with the ranking data.

13. An electronic device, comprising:
a processor; and
a memory configured to store one or more instructions executable by the processor;
wherein the processor, when loading and executing the one or more instructions, is caused to:
acquire, in response to receiving a first request from a first terminal, a first live-streaming screen by performing screen rendering based on a first video stream from the first terminal, wherein the first request is configured to request a second terminal to perform online game teaching on a current live-streaming game, and the first live-streaming screen is configured to display the current live-streaming game controlled by the first terminal and provide a second control for triggering a second request; and
acquire, in response to receiving the second request from the second terminal, a second live-streaming screen by performing screen rendering based on a second video stream from the second terminal.

14. The electronic device according to claim 13, wherein the processor, when loading and executing the one or more instructions, is caused to:
switch, in response to receiving the first request, a control authority of the current live-streaming game from the second terminal to the first terminal,
wherein an audio part of the first live-streaming screen comprises at least one of audio data of the current live-streaming game, microphone audio data of the first terminal, and/or microphone audio data of the second terminal; and
switch, in response to receiving the second request, the control authority of the current live-streaming game from the first terminal to the second terminal.

15. The electronic device according to claim 13, wherein the processor, when loading and executing the one or more instructions, is caused to:
push the second video stream to the first terminal, and acquire the second live-streaming screen by performing screen rendering in the first terminal based on the second video stream, wherein the second live-streaming screen is configured to display the current live-streaming game controlled by the second terminal and provide a first control for triggering the first request.

16. The electronic device according to claim 15, wherein the second live-streaming screen is further configured to display virtual resource data corresponding to the first control; and the processor, when loading and executing the one or more instructions, is caused to:
deduct, in response to receiving an authorization success message from the first terminal, a virtual resource indicated by the virtual resource data from a target virtual resource account, wherein the target virtual resource account is associated with a game account of the first terminal;
wherein the authorization success message indicates that the first terminal is authorized to transfer the virtual resource.

17. The electronic device according to claim 13, wherein the processor, when loading and executing the one or more instructions, is caused to:
switch, in response to completing the online game teaching, a control authority of the current live-streaming game to the second terminal; and
receive and store score data from the first terminal, wherein the score data is configured to evaluate the online game teaching of the second terminal.

18. The electronic device according to claim 17, wherein the processor, when loading and executing the one or more instructions, is caused to:
determine ranking data of the current live-streaming game based on the score data of the current live-streaming game, wherein the ranking data records score rankings of different users providing online game teaching for the current live-streaming game;
wherein the second terminal is selected based on the ranking data, and a game type of the current live-streaming game is displayed together with the ranking data.

19. A non-volatile storage medium storing one or more instructions therein, wherein the one or more instructions, when loaded and executed by a processor of an electronic device, cause the electronic device to:
acquire, in response to receiving a first request from a first terminal, a first live-streaming screen by performing screen rendering based on a first video stream from the first terminal, wherein the first request is configured to request a second terminal to perform online game teaching on a current live-streaming game, and the first live-streaming screen is configured to display the current live-streaming game controlled by the first terminal and provide a second control for triggering a second request; and
acquire, in response to receiving the second request from the second terminal, a second live-streaming screen by performing screen rendering based on a second video stream from the second terminal.

20. A computer program product, in response to being executed on an electronic device, adapted to execute a program initialized with the following steps:
acquiring, in response to receiving a first request from a first terminal, a first live-streaming screen by performing screen rendering based on a first video stream from the first terminal, wherein the first request is configured to request a second terminal to perform online game teaching on a current live-streaming game, and the first live-streaming screen is configured to display the current live-streaming game controlled by the first terminal and provide a second control for triggering a second request; and
acquiring, in response to receiving the second request from the second terminal, a second live-streaming screen by performing screen rendering based on a second video stream from the second terminal.
